# EUROPÄISCHE PATENTSCHRIFT

(11) **EP 1 987 873 B1**
(45) Veröffentlichungstag und Bekanntmachung des Hinweises auf die Patenterteilung: **06.01.2016**
(21) Anmeldenummer: 08004775.6
(22) Anmeldetag: 14.03.2008
(51) Int. Cl.: B01J 20/02, B01J 20/18, B01J 20/20, B01D 53/02

(54) **Sorbens zur trockenen Reinigung von mit Quecksilber beladenen Abgasen sowie Verfahren zu dessen Herstellung**
Sorbent for dry cleaning of waste gases loaded with mercury and method for its production
Sorbant destiné au nettoyage à sec de gaz d'échappement chargés de mercure et son procédé de fabrication

(30) Priorität: 27.04.2007 DE 102007020422
(43) Veröffentlichungstag der Anmeldung: 05.11.2008
(73) Patentinhaber: RWE Power Aktiengesellschaft, 45128 Essen (DE)
(72) Erfinder: Heschel, Wolfgang, 09599 Freiberg (DE); Meyer, Bernd, 09599 Freiberg (DE); Werner, Maik, 38642 Goslar (DE); Wirling, Jürgen, 50354 Hürth (DE)
(74) Vertreter: Kierdorf Ritschel

(56) Entgegenhaltungen:
- EP-A- 1 020 419
- DE-A1- 3 229 396
- DE-A1- 19 936 930

## Beschreibung

Die Erfindung betrifft ein Sorbens zur trockenen Reinigung von mit Quecksilber beladenen Abgasen, mit wenigstens einem adsorptiv wirkenden Bestandteil in Form von Aktivkohlen, Aktivkoksen, Zeolithen oder dergleichen und mit pulverförmigem, elementarem Schwefel.

Die Verwendung schwelfelhaltiger Substanzen oder gar die Verwendung von elementarem Schwefel zur Abscheidung von elementarem Quecksilber aus Abgasen von thermischen Prozessen, wie beispielsweise aus Abgasen von Müllverbrennungsanlagen oder von metallurgischen oder sekundärmetallurgischen Prozessen ist grundsätzlich bekannt.

Aus der DE 199 36 930 A1 ist beispielsweise zur Abscheidung von metallischem Quecksilber aus heißen Pyrolysegasen von Abfallstoffen bekannt, quecksilberbindende Stoffe in das Pyrolysegas einzubringen, die feste Quecksilberverbindungen liefern. Diese werden an Feinstaubfiltern abgeschieden. Als quecksilberbindende Stoffe werden in der DE 199 36 930 Schwefel, mit Schwefel dotierte Aktivkohlen, Herdofenkokse, Bentonite, Zeolithe, Trasse und/oder Ziegelmehle sowie schwefelabgebende Stoffe wie Natriumthiosulfat, Schwefelsäure und Salzsäure genannt.

Die Dotierung der Sorbentien bzw. deren Imprägnierung, wie diese beispielsweise in der DE 199 36 930 erwähnt ist, erfolgt dabei im Allgemeinen so, dass elementarer Schwefel in Pulverform dem Adsorbens zugemischt und die Mischung über mehrere Stunden bis zu Temperaturen von 600 °C unter Inertgasatmosphäre behandelt wird. Der entstehende Schwefeldampf penetriert hierbei das Porengefüge des Adsorbens und kondensiert darin aus (Imprägnierung).

Alternativ zu der Dotierung der Adsorbentien mit Schwefel oder Schwefelverbindungen ist es auch bekannt, pulverförmigen Schwefel und adsorptiv wirksame Substanzen getrennt dem Abgasstrom aufzugeben. Eine solche Vorgehensweise, wie sie beispielsweise ebenfalls in der DE 199 36 930 A1 beschrieben ist, ist hinsichtlich des zu erzielenden Abscheidegrades von Quecksilber wenig zufriedenstellend.

Beispielsweise aus der DE 32 29 396 ist ein Verfahren zur Herstellung von mit Elementarschwefel imprägnierten kohlenstoffhaltigen Adsorptionsmittein bekannt, das sich dadurch auszeichnet, dass man kohlenstoffhaltige Adsorptionsmittel mit Elementarschwefel mischt und in ruhender oder bewegter Schüttung auf Temperaturen von 120 °C bis 200 °C erhitzt, diese Temperatur für die Dauer von mehreren Stunden hält und das Gemisch anschließend abkühlt. Bei einer solchen Vorgehensweise penetriert der Schwefel das Porengefüge des Adsorbens und kondensiert darin aus, da die Schmelztemperatur von Schwefel bekanntlich 119 °C beträgt.

Ein entscheidender Nachteil dieses Herstellungsverfahrens ist darin zu sehen, dass es zu einer partiellen Blockierung des Porensystems durch den abgelagerten Schwefel oder die Schwefelverbindungen kommt. Von der Blockierung sind in erster Linie die Mikroporen betroffen, so dass sich die Adsorptionskapazität für die weiteren, im Abgas enthaltenen Schadstoffe, insbesondere für polychlorierte Dibenzodioxine und polychlorierte Dibenzofurane stark verringert. Dieses Phänomen erklärt sich daraus, dass der während der thermischen Behandlung entstehende Schwefeldampf, beginnend in den feinsten Poren auskondensiert, da in diesen die größte Dampfdruckerniedrigung auftritt (Kapillareffekt).

Aus der EP 1 020 419 A1 ist ein Verfahren zur Abtrennung von Quecksilber, Quecksilberverbindungen, polycyclischen aromatischen Kohlenwasserstoffen, polyhalogenierten Dibenzodioxinen und polyhalogenierten Dibenzofuranen aus reduzierend wirkenden Gasen vorgeschlagen, die als Wertstoffe H₂, CO und/oder Kohlenwasserstoffe enthalten. Bei diesem Verfahren werden die reduzierend wirkenden, verunreinigten Gase bei einer Temperatur von 180 bis 220°C während einer Reaktionszeit von 0,5 bis 10 sec mit einem Adsorptionsmittel behandelt, welches Kaolin, Bentonit, Zeolith, Ruß, Aktivkohle und/oder Herdofenkoks sowie eine schwefelhaltige Verbindung und/oder Schwefel enthält.

Der Erfindung liegt die Aufgabe zugrunde, ein Sorbens sowie ein Verfahren zu dessen Herstellung bereitzustellen, das verhältnismäßig einfach ist, insbesondere wenig Energieaufwand erfordert und eine hohe und schnelle Quecksilberaufnahme aus dem Abgas gewährleistet.

Erfindungsgemäß ist ein Sorbens zur trockenen Reinigung von mit Quecksilber beladenen Abgasen vorgesehen, mit wenigstens einem adsorptiv wirkenden Bestandteil in Form von Aktivkohlen, Aktivkoksen, Zeolithen oder dergleichen und mit pulverförmigem, elementarem Schwefel, welches sich dadurch auszeichnet, dass die Bestandteile als homogene Mischung vorliegen, wobei das Verhältnis der durchschnittlichen Korngrößen (d₅₀-Medianwerte) des Schwefels zu dem ad sorptiv wirksamen Bestandteil zwischen 1:2 und 1:20, bevorzugt zwischen 1:2,5 und 1:5 beträgt.

Die Erfindung geht von der Erkenntnis aus, die Mischung der adsorptiv wirkenden Bestandteile mit den chemisch wirkenden Bestandteilen, d.h. mit Schwefel, so zu gestalten, dass die Haftkräfte zwischen den Schwefelstaubteilchen und den Adsorbenspartikeln zuverlässig einer Entmischung vorbeugen. Hierdurch wird die energetisch aufwendige Imprägnierung des Adsorbens mit Schwefel vermieden, insbesondere wird der damit einhergehende Nachteil der Blockierung der Mikroporen des Adsorbens und die damit einhergehende Verminderung der Adorptionsleistung des Adsorbens vermieden. Es hat sich überraschenderweise herausgestellt, dass sich gerade bei dem zuvor erwähnten Verhältnis der Medianwerte der Korngrößen von adsorptiven Bestandteilen und Schwefel eine besonders stabile Mischung erzielen lässt, in dem Sinne, dass eine Entmischung im Flugstrom nicht eintritt.

Das Verhältnis der Medianwerte der Mischungsbestandteile ist so gewählt, dass sich verhältnismäßig viele Schwefelpartikel an die adsorptiv wirkenden Partikel anlagern, ohne das Adsorptionsporensystem in irgendeiner Weise zu beinträchtigen.

Zweckmäßigerweise beträgt die durchschnittliche Korngröße des Schwefels zwischen 1 bis 8 µm, vorzugsweise zwischen 4 bis 8 µm. Die durchschnittliche Korngröße des adsorptiv wirksamen Bestandteils kann etwa 20 µm betragen.

Der Schwefelgehalt des Sorbens kann zwischen 1 bis 20 Masseprozent betragen, bevorzugt beträgt dieser etwa zwischen 1 und 7 Masseprozent.

Besonders zweckmäßig ist es, wenn als adsorptiv wirkender Bestandteil ein Braunkohlenkoks mit einer durchschnittlichen Korngröße von etwa 20 µm vorgesehen ist.

Eine besonders vorteilhafte Variante des Sorbens nach der Erfindung zeichnet sich durch einen Zusatz von Staub aus metallurgischen oder sekundärmetallurgischen Prozessen aus. Dieser Prozessstaub kann Oxide und/oder Chloride aus der Gruppe der Elemente Al, Ca, Cl, Fe, K, Mg, Mn, Na, Pb, Si, Zn, Cr, Cu und Ti enthalten. Bevorzugt liegen die Metalle des Prozessstaubes als Oxide vor, Natrium und Kalium hingegen liegen bevorzugt als Chloride vor.

Es hat sich herausgestellt, dass bei einem Anteil von etwa 50 % eines solchen Prozessstaubes mit einer durchschnittlichen Korngröße von 1,5 µm die Quecksilberaufnahmefähigkeit des Sorbens überraschend gesteigert wird.

Das Verfahren zur Herstellung des Sorbens nach der Erfindung zeichnet sich dadurch aus, dass die adsorptiven Bestandteile mit dem Schwefel bei einer Temperatur von ≤ 119 °C und bei Anwesenheit von Luftsauerstoff durchmischt werden.

Bei einer vorteilhaften Variante des Verfahrens ist vorgesehen, dass das Mischen etwa bei Atmosphärendruck erfolgt.

Zweckmäßigerweise wird der Vorgang des Mischens ohne zusätzlichen Wärmeeintrag bei Umgebungstemperatur, durchgeführt.

Das erfindungsgemäße Verfahren zeichnet sich dadurch aus, dass eine schonende Mischung der Bestandteile bei Umgebungstemperatur und etwa bei Atmosphärendruck durchgeführt wird, derart, dass Haftkräfte zwischen den Schwefelstaubteilchen und den Adsorberpartikeln ausgebildet werden, ohne dass es zu einer gleichzeitigen weiteren Zerkleinerung einer der beiden Komponenten kommt oder Porenöffnungen des Adsorbens durch Druck- und Scherbeanspruchung der Mischung versiegelt werden. Dabei weist das Zahlenverhältnis der mittleren Korngröße von Schwefel, Staub und Adsorbens, beispielsweise in Form von Braunkohlenkoks einen bestimmten Wert auf, der eine Mischung ergibt, die auch aufgrund der Haftkräfte zwischen den Teilchen hinreichend stabil im Sinne einer Resistenz gegen Entmischung ist.

Die Mischdauer ist auf den Mindestwert zur Erzielung der maximalen Mischgüte begrenzt. So hergestellte pulverförmige Mischungen aus Schwefel und Aktivkohle oder Aktivkohlenstaub oder aus Schwefel und Aktivkoks (Braunkohlen-Herdofenkoks) können problemlos pneumatisch gefördert und anderweitig umgeschlagen werden und werden ohne eine thermische Behandlung direkt in Flugstromadsorber-Filterschichtanlagen eingesetzt.

Ein geeignetes Verfahren zur Reinigung des Abgases ist beispielsweise die Flugstromadsorption, wobei das pulverförmige Adsorbens direkt in den Abgasstrom dosiert wird und anschließend zusammen mit den im Abgasstrom mitgeführten Prozessstäuben in Filteranlagen abgeschieden wird. Mit dem Verfahren gemäß der Erfindung wird erreicht, den Schwefelstaub partikulär an die äußere Oberfläche der Adsorbenspartikel zu platzieren. Damit wird erreicht, dass der Schwefel für das Quecksilber gut zugänglich ist und das Adsorptionsporensystem wie auch die Zuleitungsporen des Adsorbens frei bleiben. Es lässt sich zeigen, dass zwischen der Belegungsdichte der Partikeloberfläche mit Schwefelstaub (Anzahl an Schwefelteilchen), der Korngröße von Adsorbens und Schwefel und dem Schwefelgehalt des Adsorbens ein Zusammenhang besteht. In Tabelle 1 sind die berechneten Werte für die statistische Anzahl von Schwefelteilchen je Adsorbenspartikel für unterschiedliche Teilchendurchmesser des Schwefelstaubes zusammengestellt. Bei den Größenangaben handelt es sich um den jeweiligen Medianwert d₅₀ der Korngrößenverteilung. Er entspricht der Korngröße, bei der die Summenkurve den Wert 50 % aufweist. Aus Tabelle 1 ist für einen Schwefelgehalt des dotierten Adsorbens von z. B. 10 Masseprozent abzulesen, dass sich bei einem d₅₀-Wert von 20 µm für das Adsorbens bzw. 6 µm für den Schwefelstaub im statistischen Mittel 2 Schwefelteilchen auf einem Adsorbenspartikel befinden.

**Tabelle 1: Statistische Anzahl an Schwefelteilchen je Adsorbenspartikel**

| Schwefelgehalt [Masseprozent] | d₅₀-Wert Schwefelstaub [µm] | | | |
|---|---|---|---|---|
| | 2 | 4 | 6 | 8 |
| 1 | 4,8 | 0,6 | 0,2 | 0,1 |
| 2 | 9,7 | 1,2 | 0,4 | 0,2 |
| 5 | 25,0 | 3,1 | 0,9 | 0,4 |
| 10 | 52,8 | 6,6 | 2,0 | 0,8 |
| 20 | 118,8 | 14,8 | 4,4 | 1,9 |
| 50 | 363* (43**) | 59,4 | 17,6 | 7,4 |

| | | | | |
|---|---|---|---|---|
| d₅₀-Wert Adsorbens: 20 µm; Rohdichte Adsorbens: 0,95 g/cm³, Schwefel: 2 g/cm³, *: Teilchenanzahl für Monopartikelschicht; **: korrespond. Schwefelgehalt | | | | |

Je kleiner die Schwefelteilchen, umso größer ist deren spezifische äußere Oberfläche und umso wirksamer die Quecksilberabscheidung. Gleichzeitig befinden sich bei einem vorgegebenen Schwefelgehalt mehr Schwefelteilchen auf der Oberfläche des Adsorbenspartikels. Günstig wirkt sich aus, dass feine Schwefelteilchen stärker am Adsorbenspartikel haften als größere Teilchen. Es hat sich gezeigt, das ein d₅₀-Verhältnis von Schwefel zu Adsorbens von 1:2,5 bis 1:5 zweckmäßig ist.

### Beispiel 1:

Das folgende Beispiel beschreibt die Wirkungsweise eines Sorbens, dass sich von dem Sorbens gemäß der Erfindung dadurch unterscheidet, dass das erfindungsgemäß vorgesehene Verhältnis der Medianwerte nicht eingehalten wurde.

2 kg Braunkohlenkoks mit einer Körnung < 4 mm wurden mit 0,105 kg Schwefelpellets (ca. 6 mm) entsprechend 5 Masseprozent Schwefel, in einer Trommelmühle (20 kg Mahlkörper, 70 U/min) 100 Minuten lang zerkleinert und dabei gemischt. Von der Mischung wurden die Korngrößenverteilung, die Sättigungsbeladung mit 1,3-Dichlorbenzen bei 20 °C sowie die Beladung mit elementarem Quecksilber in einem Festbettadsorber gemessen. Die Messbedingungen bei der Hg-Adsorption waren: Eintrittskonzentration für elementares Quecksilber 980 µg/m³; Adsorbertemperatur 90 °C; Lerraumgasgeschwindigkeit 1,7 cm/s; Trägergas mit 14 Vol.-% Sauerstoff, 0,4 Vol.-% Wasserdampf, Rest Stickstoff. Die pulverförmige Probe wurde in Form von 3 Einzelschichten zu je 0,5 g, getrennt durch Glaswollefilze, in den Adsorber eingebracht. Der Sandwich-Aufbau der Adsorptionsschicht gewährleistete eine gleichmäßige Durchströmung der pulverförmigen Probe.

Mittels Lasergranulometer (Helos, Fa. Sympatec) wurde ein d₅₀-Wert von 7 µm für den schwefeldotierten Koksstaub nach Zerkleinerung in der Trommelmühle bestimmt. Die mittlere Beladung mit Quecksilber betrug nach 12 Stunden 255 µg/g. Das Quecksilber wurde zu 90,6 % aus dem Gasstrom entfernt. Die Beladung mit 1,3-Dichlorbenzen reduzierte sich von 18,4 Masseprozent für den unbehandelten Herdofenkoks auf 11,2 Masseprozent für die mit Schwefel dotierte Koksprobe (Verminderung um 39 % relativ), was auf die eingetretene Blockierung von Mikroporen durch die Beanspruchung in der Mühle zurückzuführen ist.

### Beispiel 2 (nach der Erfindung):

Schwefelgranulat wurde in einer Scheibenschwingmühle bis zu einem d₅₀-Wert von 7 µm zerkleinert. Es wurden 5 Gewichtsteile des Schwefelstaubes mit 95 Gewichtsteilen Braunkohlenkoksstaub (d₅₀-Wert 20 µm) in einem Überkopfmischer homogen vermischt. Der Schwefelgehalt der erfindungsgemäß dotierten Koksprobe betrug 5 Masseprozent. Die mittlere Beladung mit Quecksilber (Bedingungen wie im Beispiel 1) betrug nach 12 Stunden 270 µg/g. Das Quecksilber wurde zu 96 % aus dem Gasstrom entfernt. Teilproben der Mischung wurden im Trockenschrank Temperaturen bis 140 °C über 4 Stunden lang ausgesetzt. Von den Proben wurde die 1,3-DCB-Gleichgewichtsbeladung wie im Beispiel 1 bestimmt. Aus Tabelle 2 ist zu schlussfolgern, dass eine thermische Nachbehandlung der erfindungsgemäß dotierten Koksprobe zu keiner Beeinträchtigung des Adsorptionsporensystems führt.

**Tabelle 2: 1,3-DCB-Sättigungsbeladung (20 °C)**

| Temperatur °C | 1,3-DCB-Beladung Masseprozent |
|---|---|
| 20 | 24,35 |
| 80 | 24,59 |
| 100 | 24,27 |
| 120 | 24,12 |
| 140 | 23,81 |

### Beispiel 3 (nach der Erfindung):

Schwefelgranulat wurde in einer Scheibenschwingmühle bis zu einem d₅₀-Wert von 7 µm zerkleinert. Es wurden 5 Gewichtsteile des Schwefelstaubes mit 95 Gewichtsteilen Braunkohlenkoksstaub (d₅₀-Wert 20 µm) in einem Überkopfmischer homogen vermischt. Der Schwefelgehalt der erfindungsgemäß dotierten Koksprobe betrug 5 Masseprozent. Der mit 5 Masseprozent Schwefel dotierten Koksstaubprobe wurde anschließend im Verhältnis von 50:50 Gewichtsteilen ein Prozessstaub aus dem Schrottrecycling nach dem Lichtbogenofenverfahren zugemischt. Der Prozessstaub wies einen d₅₀-Wert von 1,5 µm und eine Elementezusammensetzung gemäß Tabelle 3 auf. Die Metalle lagen in oxidischer Form, Natrium und Kalium als Chloride vor.

Von der Probe wurde die Quecksilberaufnahme bestimmt. Im Unterschied zu Beispiel 1 wurde eine Temperatur von 120 °C gewählt. Das Ergebnis ist graphisch in Figur 1 als zeitlicher Verlauf der Austrittskonzentration des Festbettadsorbers (Durchbruchskurve) dargestellt. Zum Vergleich eingezeichnet sind die Konzentrationsverläufe der schwefeldotierten Koksprobe (gleiche absolute Koksmasse) und des puren Prozessstaubes. Aus Figur 1 ist zu schlussfolgern, dass die Quecksilberaufnahme durch die Anwesenheit des Prozessstaubes begünstigt wird.

**Tabelle 3: Elementegehalte (> 500 ppmw) im Prozessstaub**

| | | | | | | |
|---|---|---|---|---|---|---|
| Al 6500 | Ca 62700 | Ci 28000 | Fe 233000 | K 14400 | Mg 11800 | Mn 23000 |
| Na 10600 | Pb 32400 | Si 17000 | Zn 258000 | Cr 5200 | Cu 2430 | Ti 570 |

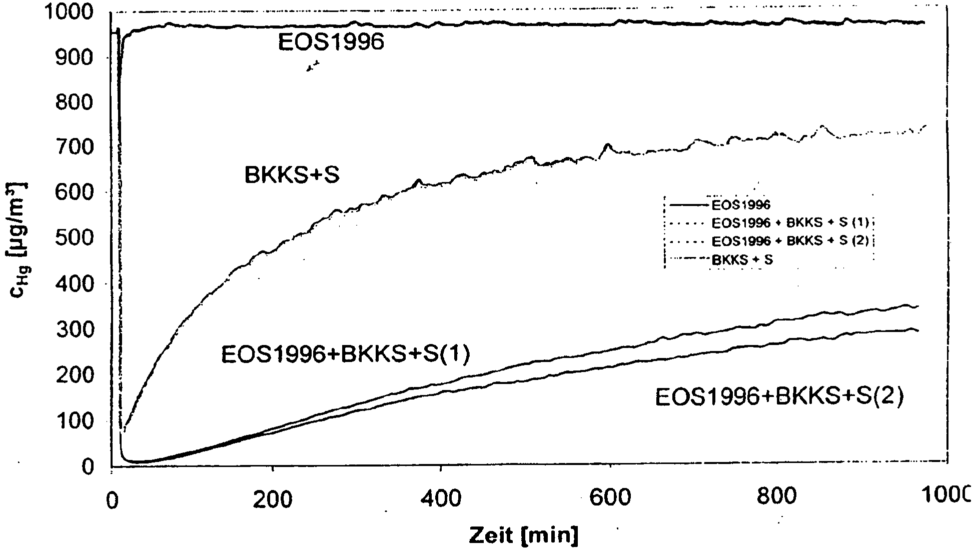

Figur 1: Die Figur 1 zeigt den zeitlichen Verlauf der Hg-Austrittskonzentration aus dem Adsorber, wobei der oberste Graph den Konzentrationsverlauf des puren Prozessstaubes (EOS1996) darstellt. Der darunter befindliche Graph veranschaulicht den Konzentrationsverlauf der mit Schwefel dotierten Koksprobe. Die darunter eingezeichneten Graphen veranschaulichen die Konzentrationsverläufe der mit Schwefel dotierten Koksstaubprobe, der im Verhältnis von 50:50 Prozessstaub mit der Zusammensetzung gemäß Tabelle 3 zugegeben wurde. Die Adsorbertemperatur betrug dabei 120 °C.

## Patentansprüche

1. Sorbens zur trockenen Reinigung von mit Quecksilber beladenen Abgasen, mit wenigstens einem adsorptiv wirkenden Bestandteil in Form von Aktivkohlen, Aktivkoksen, Zeolithen und mit pulverförmigem, elementarem Schwefel, **dadurch gekennzeichnet, dass** die Bestandteile als homogene Mischung vorliegen, wobei das Verhältnis der durchschnittlichen Korngrößen (d₅₀-Medianwerte) des Schwefels zu dem adsorptiv wirksamen Bestandteil zwischen 1:2 und 1:20 beträgt.

2. Sorbens nach Anspruch 1, **dadurch gekennzeichnet, dass** das Verhältnis der durchschnittlichen Korngrößen (d50-Medianwerte) des Schwefels zu dem adsorptiv wirksamen Bestandteil zwischen 1:2,5 und 1:5 beträgt.

3. Sorbens nach einem der Ansprüche 1 oder 2, **dadurch gekennzeichnet, dass** die durchschnittliche Korngröße des Schwefels zwischen 1 bis 8 µm beträgt.

4. Sorbens nach einem der Ansprüche 1 oder 2, **dadurch gekennzeichnet, dass** die durchschnittliche Korngröße des Schwefels zwischen 4 bis 8 µm beträgt.

5. Sorbens nach einem der Ansprüche 1 oder 4, **dadurch gekennzeichnet, dass** die durchschnittliche Korngröße des adsorptiv wirksamen Bestandteils etwa 20 µm beträgt.

6. Sorbens nach einem der Ansprüche 1 bis 5, **dadurch gekennzeichnet, dass** der Schwefelgehalt zwischen 1 bis 20 Masseprozent beträgt.

7. Sorbens nach einem der Ansprüche 1 bis 5, **dadurch gekennzeichnet, dass** der Schwefelgehalt zwischen 1 bis 7 Masseprozent beträgt.

8. Sorbens nach einem der Ansprüche 1 bis 7, **dadurch gekennzeichnet, dass** als adsorptiv wirksamer Bestandteil ein Braunkohlenkoks mit einer durchschnittlichen Korngröße von etwa 20 µm vorgesehen ist.

9. Sorbens nach einem der Ansprüche 1 bis 8 **gekennzeichnet durch** einen Zusatz von Staub aus metallurgischen oder sekundärmetallurgischen Prozessen.

10. Sorbens nach Anspruch 9, **dadurch gekennzeichnet, dass** der Prozessstaub Oxide und/oder Chloride aus der Gruppe der Elemente, umfassend Al, Ca, Ci, Fe, K, Mg, Mn, Na, Pb, Si, Zn, Cr, Cu, Ti umfasst.

11. Sorbens nach einem der Ansprüche 9 oder 10, **dadurch gekennzeichnet, dass** die durchschnittliche Korngröße des Prozessstaubes etwa 1,5 µm beträgt.

12. Verfahren zur Herstellung eines Sorbens nach einem der Ansprüche 1 bis 11, **dadurch gekennzeichnet, dass** die adsorptiven Bestandteile mit dem Schwefel bei einer Temperatur von ≤ 119 °C und bei Anwesenheit von Luftsauerstoff durchmischt werden.

13. Verfahren nach Anspruch 11, **dadurch gekennzeichnet, dass** das Mischen etwa bei Atmosphärendruck durchgeführt wird.

14. Verfahren nach einem der Ansprüche 12 oder 13, **dadurch gekennzeichnet, dass** das Mischen ohne zusätzlichen Wärmeeintrag bei Umgebungstemperatur durchgeführt wird.

## Claims

1. Sorbent for the dry purification of offgases laden with mercury, comprising at least one adsorptively acting constituent in the form of activated carbons, activated cokes, zeolites and comprising pulverulent, elemental sulphur, **characterized in that** the constituents are present as a homogeneous mixture, wherein the ratio of the average particle sizes (d₅₀ median values) of the sulphur to the adsorptively active constituent is in the range from 1:2 to 1:20.

2. Sorbent according to Claim 1, **characterized in that** the ratio of the average particle sizes (d₅₀ median values) of the sulphur to the adsorptively active constituent is in the range from 1:2.5 to 1:5.

3. Sorbent according to either Claim 1 or 2, **characterized in that** the average particle size of the sulphur is in the range from 1 to 8 µm.

4. Sorbent according to either Claim 1 or 2, **characterized in that** the average particle size of the sulphur is in the range from 4 to 8 µm.

5. Sorbent according to either Claim 1 or 4, **characterized in that** the average particle size of the adsorptively active constituent is about 20 µm.

6. Sorbent according to any of Claims 1 to 5, **characterized in that** the sulphur content is in the range from 1 to 20 per cent by mass.

7. Sorbent according to any of Claims 1 to 5, **characterized in that** the sulphur content is in the range from 1 to 7 per cent by mass.

8. Sorbent according to any of Claims 1 to 7, **characterized in that** a brown coal coke having an average particle size of about 20 µm is provided as adsorptively active constituent.

9. Sorbent according to any of Claims 1 to 8, **characterized by** an addition of dust from metallurgical or secondary metallurgical processes.

10. Sorbent according to Claim 9, **characterized in that** the process dust comprises oxides and/or chlorides from the group of elements consisting of Al, Ca, Ci, Fe, K, Mg, Mn, Na, Pb, Si, Zn, Cr, Cu, Ti.

11. Sorbent according to either Claim 9 or 10, **characterized in that** the average particle size of the process dust is about 1.5 µm.

12. Process for producing a sorbent according to any of Claims 1 to 11, **characterized in that** the adsorptive constituents are mixed with the sulphur at a temperature of ≤ 119°C and in the presence of atmospheric oxygen.

13. Process according to Claim 11, **characterized in that** the mixing is carried out at about atmospheric pressure.

14. Process according to either Claim 12 or 13, **characterized in that** the mixing is carried out at ambient temperature without additional introduction of heat.

## Revendications

1. Sorbant pour le nettoyage à sec de gaz d'échappement chargés de mercure, comprenant au moins un constituant à effet adsorbant sous la forme de charbon actif, de coke actif, de zéolithes, et comprenant du soufre élémentaire en poudre, **caractérisé en ce que** les constituants se présentent sous la forme d'un mélange homogène, le rapport entre les tailles de particules moyennes (valeur médiane d₅₀) du soufre et du constituant à effet adsorbant étant compris entre 1:2 et 1:20.

2. Sorbant selon la revendication 1, **caractérisé en ce que** le rapport entre les tailles de particules moyennes (valeur médiane d₅₀) du soufre et du constituant à effet adsorbant est compris entre 1:2,5 et 1:5.

3. Sorbant selon l'une quelconque des revendications 1 ou 2, **caractérisé en ce que** la taille de particule moyenne du soufre est comprise entre 1 et 8 µm.

4. Sorbant selon l'une quelconque des revendications 1 ou 2, **caractérisé en ce que** la taille de particule moyenne du soufre est comprise entre 4 et 8 µm.

5. Sorbant selon l'une quelconque des revendications 1 ou 4, **caractérisé en ce que** la taille de particule moyenne du constituant à effet adsorbant est d'environ 20 µm.

6. Sorbant selon l'une quelconque des revendications 1 à 5, **caractérisé en ce que** la teneur en soufre est comprise entre 1 et 20 pour cent en masse.

7. Sorbant selon l'une quelconque des revendications 1 à 5, **caractérisé en ce que** la teneur en soufre est comprise entre 1 et 7 pour cent en masse.

8. Sorbant selon l'une quelconque des revendications 1 à 7, **caractérisé en ce qu'**un coke de lignite ayant une taille de particule moyenne d'environ 20 µm est prévu en tant que constituant à effet adsorbant.

9. Sorbant selon l'une quelconque des revendications 1 à 8, **caractérisé par** un ajout de poussière issue de procédés métallurgiques ou métallurgiques secondaires.

10. Sorbant selon la revendication 9, **caractérisé en ce que** la poussière de procédé comprend des oxydes et/ou des chlorures du groupe d'éléments comprenant Al, Ca, Cl, Fe, K, Mg, Mn, Na, Pb, Si, Zn, Cr, Cu, Ti.

11. Sorbant selon l'une quelconque des revendications 9 ou 10, **caractérisé en ce que** la taille de particule moyenne de la poussière de procédé est d'environ 1,5 µm.

12. Procédé de fabrication d'un sorbant selon l'une quelconque des revendications 1 à 11, **caractérisé en ce que** les constituants adsorbants sont mélangés avec le soufre à une température ≤ 119 °C et en présence d'oxygène de l'air.

13. Procédé selon la revendication 11, **caractérisé en ce que** le mélange est réalisé environ à la pression atmosphérique.

14. Procédé selon l'une quelconque des revendications 12 ou 13, **caractérisé en ce que** le mélange est réalisé à température ambiante sans apport de chaleur supplémentaire.
